# DEMANDE DE BREVET EUROPEEN

(11) **EP 2 020 759 A1**
(43) Date de publication de la demande: **04.02.2009**
(21) Numéro de dépôt: 07290972.4
(22) Date de dépôt: 01.08.2007
(51) Int. Cl.: H04B 7/005

(54) **Dispositif et procédé de communication sans fil**

(71) Demandeur: GEMPLUS, 13420 Gémenos (FR)
(72) Inventeur: Capomaggio, Grégory,c/o Axalto S.A., 92190 Meudon (FR)
(74) Mandataire: Cour, Pierre

(57) **Abrégé**

Un dispositif de communication comporte une interface RF 20 et une CPU 10. L'interface RF 20 dispose d'un canal physique PhCh pour échanger des messages radios sur un réseau sans fil. Le canal physique PhCh est couplé à au moins deux canaux logiques LCᵢ. La CPU 10 est reliée à l'interface RF 20 pour mettre à disposition au moins deux services Sᵢ sur le réseau sans fil. Chaque service Sᵢ est associé à un canal logique LCᵢ de l'interface RF 20. La CPU 10 associe à chaque service Sᵢ un paramètre de transmission Pᵢ, et transmets ledit paramètre de transmission Pᵢ au canal logique LCᵢ associé au service Sᵢ. L'interface RF 20 configure le canal physique PhCh en fonction du paramètre de transmission Pᵢ en fonction du canal logique LCᵢ en cours de transmission.

## Description

L'invention se rapporte à un dispositif de communication sans fil. Plus particulièrement, l'invention se rapporte à des dispositifs utilisant des liaisons associées à des services ayant différents niveaux de sécurité.

Les communications radiofréquences sont un mode de communication de plus en plus utilisé pour connecter des dispositifs électroniques entre eux. A titre indicatif, il est connu d'utiliser des interfaces de type Bluetooth, WiFi (standard IEEE 802.11), ZigBee (standard IEEE 802.15.4) ou autre, pour échanger des données entre un ordinateur, un téléphone, un appareil photo, une imprimante, ou d'autres périphériques. Pour simplifier l'usage des différents dispositifs, il est connu d'avoir recours à des services rendus visibles aux autres dispositifs par l'intermédiaire de l'interface radio fréquence. Par « service », il faut ici comprendre une application permettant d'accéder de manière contrôlée à une ou plusieurs ressources du dispositif de communication.

A titre, d'exemple, une imprimante disposant d'une interface WiFi va émettre régulièrement un message afin de proposer un service d'impression. Le service d'impression consiste à imprimer un fichier qui lui est envoyé. Un dispositif, tel qu'un ordinateur portable ou un appareil photo, disposant d'une interface de même type et se trouvant dans le champ d'émission de l'imprimante peut signaler à son utilisateur qu'un service d'impression est disponible. L'utilisateur peut alors décider d'imprimer à partir du dispositif sur l'imprimante.

La notion de service peut aussi être transparente pour un utilisateur. C'est le cas pour une borne d'accès à un réseau d'information ou les transactions de connexion au réseau se font sans intervention de l'utilisateur. C'est le cas, par exemple pour un service d'authentification d'utilisateur via un dispositif communicant ou tout simplement pour l'accès à un réseau de données.

Un même dispositif de communication peut être associé à plusieurs services. A titre d'exemple, un assistant numérique personnel ou PDA (de l'anglais : Personal Digital Assistant) qui dispose d'une interface de type WiFi ou Bluetooth peut disposer d'un service de connexion automatique à un serveur en réseau pour se synchroniser, d'un service d'authentification pour permettre d'authentifier l'utilisateur du PDA lorsqu'il utilise un autre ordinateur, d'échanger des données avec un autre PDA, d'un service de localisation qui permette de situer physiquement l'utilisateur à l'intérieur d'un site et/ou de recevoir des messages à large diffusion. De nombreux autres exemples sont possibles avec la multiplication des fonctionnalités des appareils, tel qu'un téléphone multimédia ayant également la fonction de baladeur et d'appareil photo tout en étant utilisable pour des opérations de paiement.

Actuellement, beaucoup de dispositifs de communication numérique utilisent un seul canal physique de transmission divisé en canaux logiques, chaque canal logique supportant un service qui lui est associé. Les canaux logiques sont donc multiplexés sur le même canal physique. D'une manière générale, le canal physique est configuré pour garantir une qualité de réception minimale tout en garantissant une puissance minimale d'émission qui convienne à tous les services.

Un inconvénient survient lorsque l'on utilise simultanément des services devant être restreint à une certaine distance tout en disposant simultanément de services nécessitant une communication sur une plus grande distance.

La présente invention vise à résoudre l'inconvénient précité.

Un premier aspect concerne un procédé de communication d'un dispositif communicant comportant une interface de communication radiofréquence et une unité centrale. L'interface de communication radiofréquence dispose d'au moins un canal physique pour échanger des messages radios sur un réseau sans fil et de moyens pour multiplexer au moins deux canaux logiques sur ledit canal physique. L'unité centrale est reliée à l'interface de communication pour mettre à disposition au moins deux services sur le réseau sans fil, chacun des services étant associé à un canal physique distinct de l'interface de communication. L'unité centrale associe à chaque service un paramètre de transmission, et transmets ledit paramètre de transmission au canal logique associé audit service. L'interface de communication configure le canal physique en fonction du paramètre de transmission en fonction du canal logique en cours de transmission.

Un deuxième aspect concerne un dispositif de communication comportant une interface de communication radiofréquence et une unité centrale. L'interface de communication radiofréquence dispose d'au moins un canal physique pour échanger des messages radios sur un réseau sans fil et disposant de moyens pour multiplexer au moins deux canaux logiques sur ledit canal physique. L'unité centrale reliée à l'interface de communication, ladite unité centrale coopérant avec l'interface de communication pour mettre à disposition au moins deux services sur le réseau sans fil, chacun des services étant associé à un canal physique distinct de l'interface de communication. L'unité centrale comporte un moyen pour définir au moins un paramètre de transmission propre à chaque service et un moyen pour transmettre ledit paramètre à ladite interface de communication. L'interface de communication comporte un moyen pour ajuster au moins un paramètre du canal physique en fonction du paramètre de transmission propre au service associé au canal logique émis.

De manière préférentielle, le paramètre de transmission correspond à une puissance maximale d'émission et/ou à une sensibilité maximale de réception.

L'invention sera mieux comprise, et d'autres particularités et avantages apparaîtront à la lecture de la description qui va suivre, la description faisant référence aux dessins annexés, parmi lesquels :
la figure 1 illustre un système de réseau de communication sans fil mettant en oeuvre l'invention,
la figure 2 représente un schéma structurel, et la figure 3 représente un schéma fonctionnel d'un dispositif de communication selon l'invention.

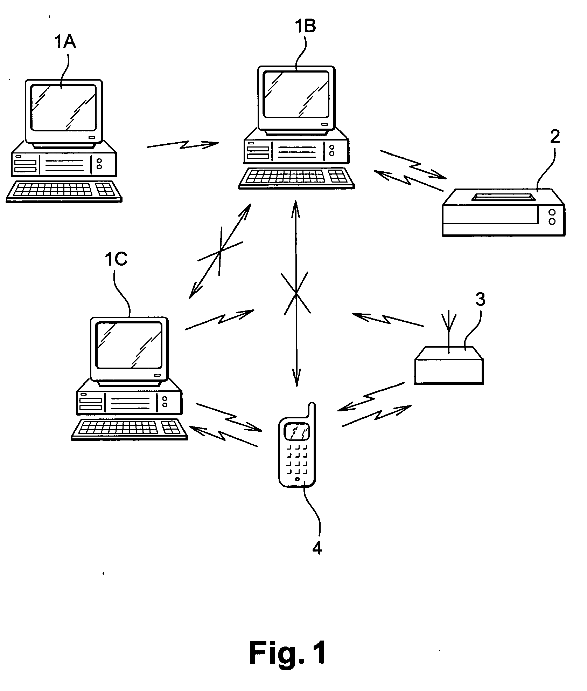

La figure 1 illustre un système de réseau de communication dans lequel plusieurs type de matériel et de services. A titre indicatif, il s'agit d'un réseau de selon le standard WiFi, mais un autre standard de communication pourrait être utilisé, tel que ZigBee ou Bluetooth par exemple. Le système en question peut être mis en place dans une zone physique couvrant quelques dizaines de mètres carrés, tel que par exemple un plateforme de bureaux ouverts, un appartement, une bibliothèque avec des terminaux mis à disposition du public ou autre. Dans l'exemple représenté, le système comporte des dispositifs de communication fixes tel que des ordinateurs 1, une imprimante 2, une borne de communication 3. Egalement, suivant le type de lieu où est placé le système la borne de communication peut être une borne d'accès à internet, une borne de contrôle d'accès ou encore une borne de diffusion de données. Le système comporte en outre un dispositif de communication mobile 4, et il pourrait en comporter plusieurs. Le dispositif de communication mobile 4 est par exemple un badge intelligent, un PDA, un appareil photo ou un téléphone mobile muni d'une interface WiFi.

Parmi les différents types de services pouvant exister dans le système de très nombreuses possibilités sont offertes. Une première catégorie de services peut nécessiter une couverture étendue à toute la zone sur laquelle s'étend le réseau. A titre d'exemples non exhaustifs, cette première catégorie peut comporter :
- échange de fichier entre l'imprimante 2 et un ordinateur 1, un appareil photo ou un téléphone mobile multimédia,
- connexion à internet entre les ordinateurs 1 et une borne d'accès à Internet,
- service de téléphonie sur IP (Internet Protocole) entre une borne d'accès à Internet et un téléphone mobile,
- localisation de personnes présentes dans une pièce par une borne de contrôle d'accès.
Pour une deuxième catégorie de services, il est préférable d'avoir une communication plus réduite, soit pour des raisons de confidentialité, soit pour permettre une réduction du nombre de dispositifs accessibles. A titre d'exemples non exhaustifs, cette deuxième catégorie peut comporter :
- synchronisation de données entre un PDA et un ordinateur 1A,
- échange de fichier entre un ordinateur 1 et un balladeur ou un téléphone mobile,
- identification d'un utilisateur d'ordinateur avec son badge, son téléphone mobile ou son PDA (confidentialité),
- paiement d'une transaction réalisée sur l'ordinateur avec son téléphone mobile.

Ainsi un téléphone multimédia peut disposer simultanément d'un service d'échange de fichier pour lequel il est préférable que l'utilisateur puisse identifier facilement l'ordinateur avec lequel il souhaite se connecter. Pour ce type d'application, il est préférable d'avoir une communication restreinte à un périmètre proche de l'utilisateur, par exemple moins d'un mètre. Pour une transaction de type paiement, ou d'identification à l'aide de données confidentielles, il peut être également préférable de restreindre la communication à une distance de l'ordre de quelques centimètres. A contrario, un service de téléphonie mobile doit pouvoir utiliser une zone de communication la plus large possible.

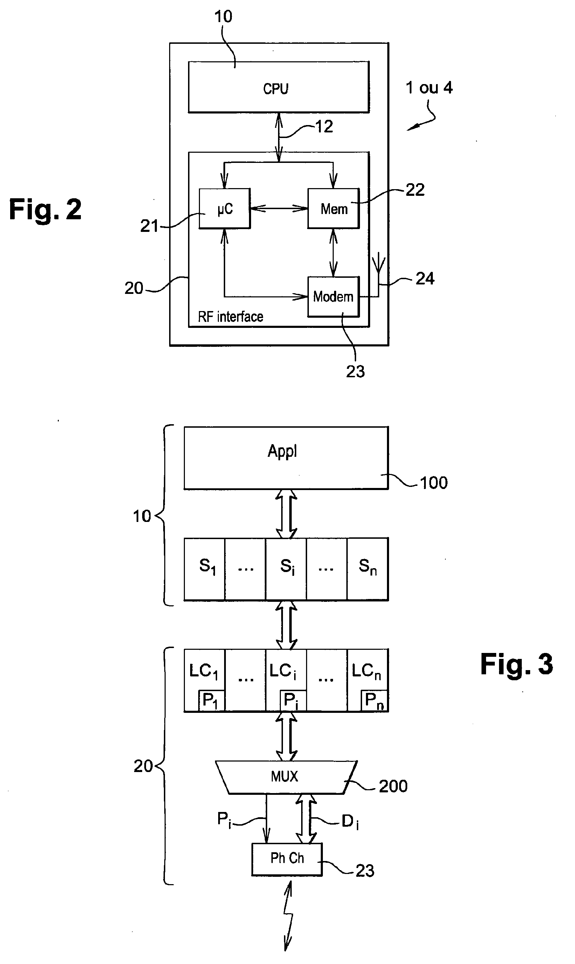

Les figures 2 et 3 représentent toutes deux un dispositif de communication fixe ou mobile de la figure 1 qui dispose de plusieurs canaux logiques utilisant un unique canal physique. La figure 2 représente une structure simplifiée du dispositif de communication 1 ou 4 qui comporte une unité centrale de traitement (CPU) 10, une interface radiofréquence (RF) 20 et une pluralité d'autres interfaces non représentées. Un bus central 12 relie la CPU 10 à l'interface RF 20. La CPU 10 correspond à l'unité de traitement principal du dispositif de communication et qui contrôle tous les processus en cours sur le dispositif de communication 1 ou 4. Parmi ses attributions, c'est la CPU 10 qui contrôle tous les services et périphérique du dispositif de communication, et notamment les services utilisant l'interface RF 20. L'interface RF 20 est une interface de communication, par exemple WiFi, réalisée sous forme de module ou de circuit intégré, selon une technique connue.

Selon un mode de réalisation, l'interface RF 20 comporte un microcontrôleur 21, une mémoire tampon 22, un circuit de modulation/démodulation (Modem) 23 et une antenne 24. Le microcontrôleur 21 est relié au bus central 12 pour recevoir des instructions provenant de la CPU 10. Le microcontrôleur 21 assure le contrôle et la synchronisation des transferts de données de la mémoire tampon 22, dans laquelle il peut aussi lire et écrire afin d'empaqueter les données dans une couche protocolaire liée au standard de transmission utilisé. Le microcontrôleur 21 est aussi relié au Modem 23 pour en assurer le contrôle et la commande. Le Modem 23 est relié d'une part à la mémoire 22 et d'autre part à l'antenne 24. Le Modem 23 assure la transformation d'un train de bits présent dans la mémoire 22 en un signal électrique émis par l'antenne 24. Réciproquement, le Modem 23 assure également la transformation d'un signa reçu par l'antenne 24 en un train de bit reçu qu'il stocke dans la mémoire 22.

La mémoire tampon 22 est une mémoire, par exemple de type RAM, qui sert à mémoriser les données provenant de la CPU 10 avant de les émettre, les données reçues par le Modem 23 avant de les transmettre à la CPU 10, et aussi des données de paramétrage. Les données de paramétrage sont définie par la CPU 10 et servent à configurer l'interface RF 20. Une fois configurée, la CPU 10 n'a plus qu'à adresser des données propres à chaque service à chaque canal logique de l'interface RF pour émettre ou recevoir des données.

Parmi les données de paramétrage, il y a des paramètres protocolaires, des paramètres de gestion d'interface et des paramètres de transmission. Les paramètres liés à la gestion de l'interface RF 20 peuvent comprendre un nombre de canaux logiques gérés par l'interface, des zones de mémoire allouée pour chaque canal logique, des temporisations de mise en veille, des données liées au multiplexage temporel des canaux logiques, indiquant éventuellement des priorités entre les canaux logiques. Les paramètres protocolaires sont liés à chaque canal logique sont utilisés par le microcontrôleur pour bâtir une trame de bit à transmettre selon le protocole utilisé.

Les paramètres de transmission sont des paramètres propres au canal physique utilisé. Les paramètres de transmission sont utilisés par le microcontrôleur 21 pour commander le Modem 23 et ils comportent des informations relatives, entre autres, à la fréquence du canal, au type de modulation utilisé, au niveau de sensibilité de réception et à une puissance d'émission. Selon l'invention, au moins un paramètre de transmission est dupliqué autant de fois qu'il existe de canaux.

La figure 3 illustre le fonctionnement du dispositif de communication 1 ou 4 sous forme de réalisation de fonction. La CPU 10 dispose d'une couche applicative 100 qui est susceptible d'activer un ou plusieurs services de communication S₁ à Sₙ. La CPU 10 configure l'interface RF 20 pour qu'à chaque service S₁ à Sₙ corresponde un Canal Logique associé LC₁ à LCₙ. Comme indiqué précédemment, chaque canal logique comporte une zone mémoire dédiée pour les données à émettre et à recevoir, les paramètres protocolaires propres au canal et le paramètre de transmission P₁ à Pₙ associé au canal logique LC₁ à LCₙ et au service S₁ à Sₙ. Le paramètre de transmission Pᵢ est déterminé directement ou indirectement par la CPU 10 en fonction de la portée souhaitée pour le service Sᵢ qui lui est associé.

La CPU 10 fournit les paramètres de gestion d'interface à l'interface RF 20. Le traitement séquentiel réalisé sur chaque canal est réalisé par le microcontrôleur 21 qui échange de manière séquentielle les données Dᵢ de chaque canal logique LCᵢ à émettre par ou reçu par le canal physique PhCh matérialisé par le Modem 23. L'échange réalisé de manière séquentielle réalise ainsi un multiplexage 200 temporel des canaux logiques LC₁ à LCₙ dans le canal physique PhCh. Parallèlement à l'échange de donnée Dᵢ entre la mémoire 22 et le Modem 23, le microcontrôleur 21 change le paramètre de transmission Pᵢ associé au canal logique LCᵢ sélectionné.

Le paramètre de transmission Pᵢ correspond à un paramètre limitant la portée de transmission. Ainsi, ce paramètre de transmission peut être déterminé en fonction de la portée souhaitée pour chaque service S₁ à Sₙ. Le paramètre de transmission Pᵢ est par exemple un paramètre correspondant à une puissance maximum d'émission ou un niveau maximum de sensibilité.

Typiquement, le niveau de sensibilité permet de ne considérer que des signaux reçus avec une puissance minimum. Typiquement, plus le niveau de sensibilité est élevé, plus l'amplification en réception est élevée et donc plus un signal faible, c'est à dire en provenance d'un dispositif éloigné peut être reçu. Ce type de paramètre permet de limiter la pollution d'un récepteur par les signaux reçus correspondant à des services provenant de dispositif trop éloigné pour ce type de service.

La puissance maximum d'émission correspond au rayonnement de l'antenne. Plus cette puissance d'émission est élevée, plus le signal reçu par un récepteur est fort. Le champ électrique produit par une antenne étant décroissant avec la distance, la puissance d'émission est proportionnelle à la distance à laquelle un récepteur peut capter le signal à un niveau de sensibilité donnée. Ce type de paramètre permet de limiter le risque d'avoir des données sensibles interceptées par un dispositif plus éloigné.

Il est tout à fait possible d'utiliser un paramètre de transmission Pi qui corresponde à un double paramètre reprenant à la fois le niveau maximum de sensibilité et la puissance maximale d'émission. Dans ce cas de configuration, il convient de choisir des niveaux de puissance maximum et de sensibilité maximum qui soient adaptés entre les dispositifs destinés à communiquer entre eux.

L'homme du métier peut remarquer qu'il est question de puissance maximale et de niveau de sensibilité maximale. Suivant le protocole, ce niveau est fixe ou ajusté lorsqu'une transaction est effectuée ou une communication préétablie. Dans le cas d'un ajustement en puissance/sensibilité de réception, le paramètre de transmission Pi est utilisé pour limiter la plage de variation de l'ajustement indépendamment pour chaque canal logique.

L'utilisation d'un paramètre de transmission relatif à la puissance d'émission présente également un intérêt en terme d'économie d'énergie. En effet limiter la puissance d'émission de certains services limite automatiquement la puissance moyenne consommée par le dispositif de communication. Le paramètre de transmission est donc particulièrement bien adapté pour être utilisé dans un dispositif de communication mobile, c'est à dire qui dispose d'une batterie autonome pour être utilisé de manière mobile.

## Revendications

1. Procédé de communication d'un dispositif communicant (1 à 4) comportant une interface de communication radiofréquence (20) et une unité centrale (10), l'interface de communication radiofréquence (20) disposant d'au moins un canal physique (PhCh, 23) pour échanger des messages radios sur un réseau sans fil et disposant de moyens pour multiplexer (MUX, 200) au moins deux canaux logiques (LC₁, LCᵢ, LCₙ) sur ledit canal physique (PhCh), l'unité centrale (10) étant reliée à l'interface de communication (20) pour mettre à disposition au moins deux services (S₁, Sᵢ, Sₙ) sur le réseau sans fil, chacun des services (S₁, Sᵢ, Sₙ) étant associé à un canal logique (LC₁, LCᵢ, LCₙ) distinct de l'interface de communication (20), **caractérisé en ce que** :
- l'unité centrale (10) associe à chaque service (S₁, Sᵢ, Sₙ) un paramètre de transmission (P₁, Pᵢ, Pₙ), et transmets ledit paramètre de transmission (P₁, Pᵢ, Pₙ) au canal logique (LC₁, LCᵢ, LCₙ) associé audit service (S₁, Sᵢ, Sₙ), et
- l'interface de communication (20) configure le canal physique (PhCh) en fonction du paramètre de transmission (P₁, Pᵢ, Pₙ) en fonction du canal logique (LC₁, LCᵢ, LCₙ) en cours de transmission.

2. Procédé selon la revendication 1, dans lequel le paramètre de transmission (P₁, Pᵢ, Pₙ) correspond à une puissance maximale d'émission.

3. Procédé selon la revendication 1, dans lequel le paramètre de transmission (P₁, Pᵢ, Pₙ) correspond à une sensibilité maximale de réception.

4. Procédé selon l'une des revendications 1 à 3, dans lequel le canal physique (PhCh) de l'interface de communication est conforme à l'un des standards de communication suivant : Bluetooth, ZigBee ou WiFi.

5. Dispositif de communication comportant :
- une interface de communication radiofréquence (20) disposant d'au moins un canal physique (PhCh) pour échanger des messages radios sur un réseau sans fil et disposant de moyens pour multiplexer au moins deux canaux logiques (LC₁, LCᵢ, LCₙ) sur ledit canal physique (PhCh), et
- une unité centrale (10) reliée à l'interface de communication, ladite unité centrale (10) coopérant avec l'interface de communication (20) pour mettre à disposition au moins deux services (S₁, Sᵢ, Sₙ) sur le réseau sans fil, chacun des services (S₁, Sᵢ, Sₙ) étant associé à un canal logique (LC₁, LCᵢ, LCₙ) distinct de l'interface de communication (20),
**caractérisé en ce que :**
- l'unité centrale (10) comporte un moyen pour définir au moins un paramètre de transmission (P₁, Pᵢ, Pₙ) propre à chaque service (S₁, Sᵢ, Sₙ) et un moyen pour transmettre ledit paramètre (P₁, Pᵢ, Pₙ) à ladite interface de communication (20), et
- l'interface de communication (20) comporte un moyen pour ajuster au moins un paramètre du canal physique (PhCh) en fonction du paramètre de transmission (P₁, Pᵢ, Pₙ) propre au service (S₁, Sᵢ, Sₙ) associé au canal logique (LC₁, LCᵢ, LCₙ) émis.

6. Dispositif selon la revendication 5, dans lequel le paramètre de transmission (P₁, Pᵢ, Pₙ) correspond à une puissance maximale d'émission.

7. Dispositif selon la revendication 5, dans lequel le paramètre de transmission (P₁, Pᵢ, Pₙ) correspond à une sensibilité maximale de réception.

8. Dispositif selon l'une des revendications 5 à 7, dans lequel le canal physique (PhCh) de l'interface de communication est conforme à l'un des standards de communication suivant : Bluetooth, ZigBee ou WiFi.

9. Dispositif selon l'une des revendications 5 à 8, lequel dispose d'une batterie autonome pour être utilisé de manière mobile.
